# EUROPEAN PATENT APPLICATION

(11) **EP 1 209 463 A2**
(43) Date of publication of application: **29.05.2002**
(21) Application number: 01309820.7
(22) Date of filing: 22.11.2001
(51) Int. Cl.: G01N 27/90, G01N 17/00

(54) **Detecting corrosion of lighting columns by eddy current technique**

(30) Priority: 27.11.2000 GB 0028787
(71) Applicant: Dinsley Devices Limited, Carlisle CA1 1PN (GB)
(72) Inventor: Owston, Charles Neville, Barnard Castle, County Durham DL12 8TZ (GB)
(74) Representative: Vinsome, Rex Martin

(57) **Abstract**

A method and apparatus (1) for detecting corrosion of lighting columns (2) is disclosed. A drive coil assembly (4) applies a varying magnetic field to the lighting column (2) to induce varying eddy currents in the column (2), and a magnetic field caused by the varying eddy currents in the column (2) is detected by means of a detector coil (5).

## Description

The present invention relates to a method and apparatus for detection of corrosion in hollow metallic tubes, and relates particularly, but not exclusively, to a method and apparatus for detection of metal loss due to corrosion in the lower part of lighting columns such as street lighting columns.

Wind loading produces high stresses near and just below ground level in street lighting columns and similar structures. Surface water, salt used to prevent icing on roads, and the ready access of air to that part of lighting columns just above and below ground level produce a localised, highly corrosive environment which surrounds the high stress region in the lighting column. Internal corrosion of the column may also occur. In metal lighting columns, the metal loss consequent on such corrosion can so weaken the column that it collapses, which may result in significant danger to pedestrians and/or traffic.

Prior art methods of detecting corrosion damage in lighting columns are known in which the column is mechanically tested, for example by applying a bending stress to the column and determining if the column deforms in an inappropriate manner or fractures. Such methods suffer from the drawback that they only provide a reliable indication of corrosion in the case of columns which have undergone significant corrosion, and do not provide any indication of corrosion of columns which have undergone a lesser degree of corrosion. Furthermore, the applied stress may do significant damage to the column or its mountings.

Preferred embodiments of the present invention seek to overcome the above disadvantages of the prior art.

According to an aspect of the present invention, there is provided a method of detecting corrosion of a hollow metallic tube, the method comprising:-
applying a varying first magnetic field to a hollow metallic tube to induce a varying electric current in the tube; and
detecting a second magnetic field caused at least partially by said varying electric current in the tube.

It has been found that the second magnetic field, caused by varying electric currents in the tube, which are in turn caused by applying the varying first magnetic field to the tube at a particular location along the tube, is dependent upon the thickness of metal in the tube at that location. Accordingly, this provides the advantage of enabling corrosion of the walls of a hollow metallic tube to be non-destructively determined, and enables a lesser degree of corrosion to be detected than in prior art methods.

The step of applying said varying first magnetic field to the hollow metallic tube may comprise applying a varying electric current to at least one excitation coil arranged adjacent the tube.

At least one said excitation coil preferably at least partially surrounds the tube.

The hollow metallic tube may be a lighting column.

The step of detecting said second magnetic field preferably comprises detecting said second magnetic field at at least one location inside the hollow metallic tube.

This provides the advantage of enabling the second magnetic field to be detected on the opposite side of the tube wall to that to which any excitation coil is located. This in turn provides the advantage that the first magnetic field, which produces the varying electric current in the tube, is largely attenuated by the tube at the location at which the second magnetic field, resulting from the varying current in the tube, is detected, and the properties of the second magnetic field are largely determined by the thickness of the tube at that point.

The method may further comprise the step of evaluating phase and/or amplitude data of said second magnetic field.

The method may further comprise the step of comparing data representing said second magnetic field at a predetermined location along the tube with data corresponding to an uncorroded part of the tube.

According to another aspect of the present invention, there is provided an apparatus for detecting corrosion of a hollow metallic tube, the apparatus comprising:-
excitation means for applying a varying first magnetic field to a hollow metallic tube to induce a varying electric current in the tube; and
detection means for detecting a second magnetic field caused at least partially by said varying electric current in the tube.

The excitation means may comprise at least one excitation coil for at least partially surrounding the tube.

At least one said excitation coil preferably comprises respective hinge means and has open and closed conditions for respectively enabling the coil to be mounted to and removed from the tube.

The windings of at least one said excitation coil may not be interrupted when said coil is in the open condition thereof.

The detection means may be adapted to detect said second magnetic field at at least one location inside the tube.

The detection means may comprise at least one detection coil and/or Hall effect sensor and/or magnetic diode.

The apparatus may further comprise amplifier means for amplifying signals representing said second magnetic field.

This provides the advantage of enabling compensation to be made for frequency sensitivity of the detection means.

The apparatus may further comprise position detector means for detecting changes in the position of said detection means relative to the tube.

In a preferred embodiment, the detection means comprises at least one detector, and said position detector means comprises at least one housing for receiving a respective detector and providing a respective output signal representing changes in the position of said detector relative to said housing.

Preferred embodiments of the invention will now be described, by way of example only and not in any limitative sense, with reference to the accompanying drawings, in which:-
Figure 1 is a schematic view of an apparatus embodying the present invention for detecting corrosion of a lighting column;
Figure 2 is a detailed perspective view of an excitation coil of a first embodiment of the present invention;
Figure 3 is a cross-sectional view of a detection means of the first embodiment of the present invention;
Figure 4 is a perspective view of an excitation coil of second embodiment of the present invention; and
Figure 5 is a cross-sectional view of a detection apparatus of the second embodiment of the invention.

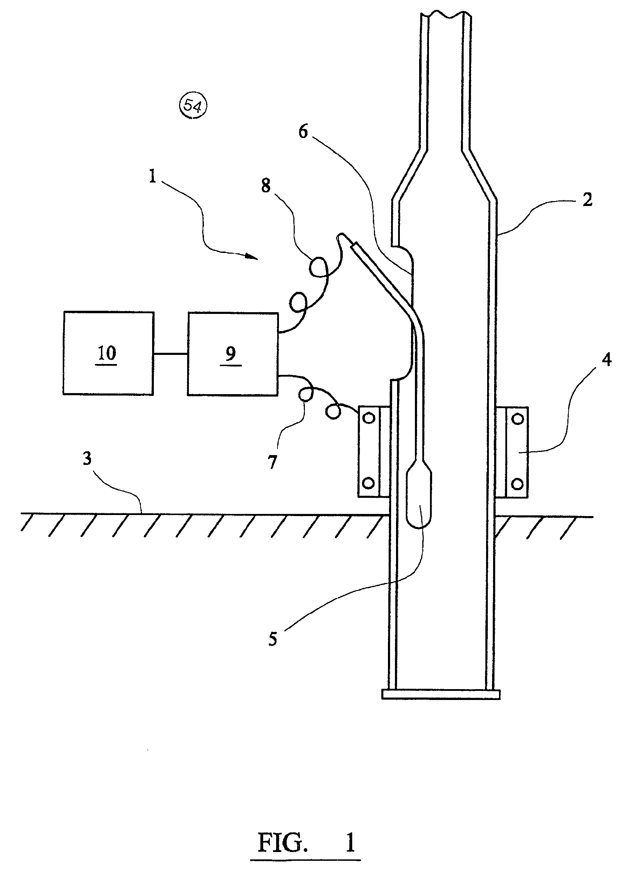

Referring to figures 1 to 3, an apparatus 1 for detecting corrosion in the walls of a lighting column 2 near to ground level 3 comprises an excitation coil assembly 4 for surrounding the base of the column 2, and a detector coil 5 for detecting alternating magnetic fields inside the column 2. The detector 5 is inserted into the column 2 by means of an access door 6. The excitation coil assembly 4 and detector 5 are connected by means of respective cables 7, 8 to an electronics unit 9 which provides the excitation current for drive coil assembly 4 and processes voltage signals from detector 5, as well as providing input signals to a display 10, which displays the results of the inspection process and provides data storage facilities.

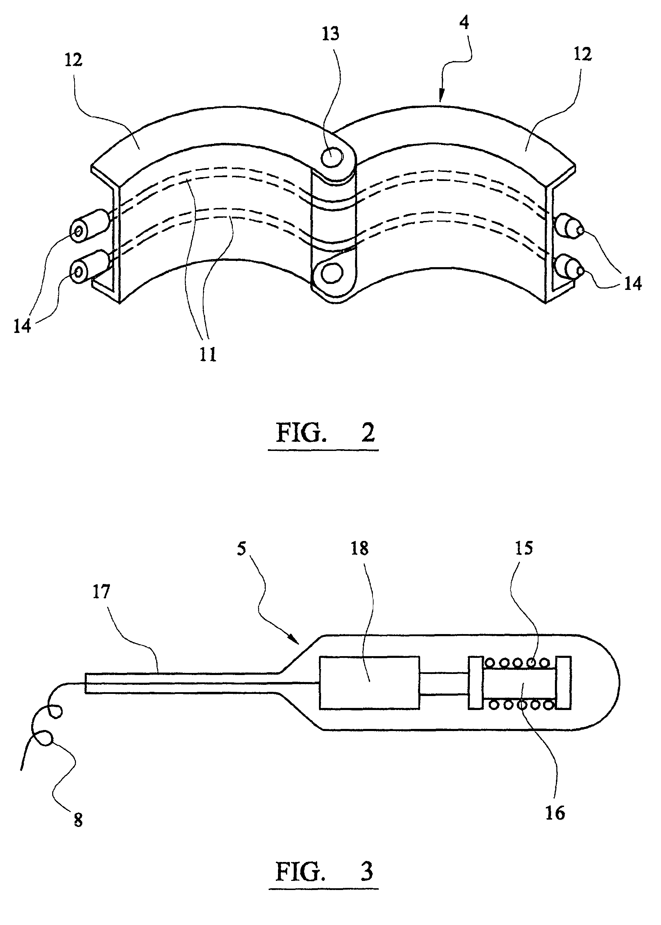

Referring to Figure 2, the drive coil assembly 4 of Figure 1 comprises one or more wire coils 11 wound onto a frame 12. The frame 12 is provided in two halves hinged together at a hinge 13, which enables the frame 12 to be opened to be placed around the column 2 and then closed so as to completely encircle the column 2. The drive coil 4 comprises one or more turns of wire 11 on the frame 12, and each turn of wire 11 is provided with an openable connector 14 located at an open joint in the frame 12. This allows the turns 11 of the coil to open while the frame 12 is placed around the column 2 and then to close again, completing the electrical circuit when the frame 12 is closed around the column 2. The drive coils 11 are connected to the electronics unit 9 by means of cable 7.

Referring to Figure 3, the detector 5 of Figure 1 comprises a coil 15 of wire wound around a support 16 at the distal end of a wand 17 which can be passed down the inside of the column 2. When the coil 15 is placed in an alternating magnetic field, a voltage is induced in the coil 15, the voltage being small and dependent upon the frequency of the alternating current in the drive coil system 4. The output voltage of coil 15 is therefore passed through an electronic amplifier 18 which boosts the output voltage from the coil 15 and compensates for changes in the output of the detector coil 15 with frequency, so that the overall sensitivity of the detector 5 remains generally constant. The detector 5 is connected to the electronics unit 9 by means of cable 8.

The operation of the embodiment of figures 1 to 3 will now be described.

In order to detect corrosion at that part of the column 2 near to the ground 3, the drive coil assembly 4 is placed around a part of the column 2 that is well away from the ground 3 and appears to be un-corroded. The detector 5 on wand 17 is placed inside the column 2 via access door 6, such that the coil 15 of the detector 5 is located opposite the drive coil 4. An alternating electric current is then supplied to drive coil 4 from electronics unit 9, and the frequency of the alternating current supplied to the drive coil 4 is adjusted to give a pre-determined phase relationship between the current through the drive coil assembly 4 and the output voltage from the detector 5. This serves to calibrate the apparatus so that subsequent readings can be converted into a measurement of loss of material from the wall of the column 2.

The detector 5 is then scanned over the interior of the column 2 in the region adjacent the ground 3, both below and above the ground. If metal has been lost from the wall of the column 2, as the detector 5 passes the corroded areas, the phase relationship between the excitation current in drive coil 4 and the output voltage from detector 5 will change, and appropriate indications can then be displayed on display 10, after processing by electronics unit 9.

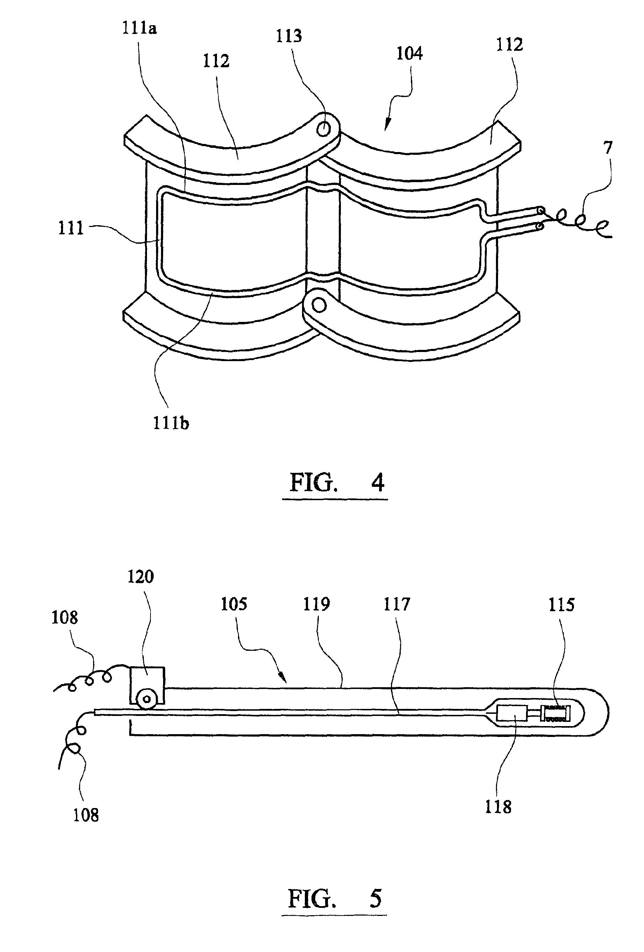

Referring now to Figure 4, in which parts common to the embodiment of Figure 2 are denoted by like reference numerals but increased by 100, the drive coil assembly 104 of a second embodiment has a larger frame 112 than that of the embodiment of Figure 2, the frame 112 again being in two halves hinged together at hinge 113 to enable the frame 112 to be opened to be placed around the column 2 and then closed to completely encircle the column 2. A drive coil 111 comprises one or more turns of wire as shown in Figure 4, this arrangement removing the need for connectors in the windings.

The coil 111 of Figure 4 in effect provides a pair of coils 111a, 111b which encircle the column 2 at spaced apart locations along the axis of the column 2 and wound in opposite directions. The frame 112 is made large enough to ensure that the upper part 11a of the coil 111 surrounds a part of the column 2 that is well above ground and is therefore likely to be un-corroded. The lower part 111b of the coil 111 is located adjacent the high risk zone near ground level 3. The coil 111 is connected to the electronics unit 9 of Figure 1 by means of electrical cable 7.

Referring to Figure 5, in which parts common to the embodiment of Figure 3 are denoted by like reference numerals but increased by 100, a detector 105 of a second embodiment again includes a coil 115 arranged at the distal end of a wand 117, the coil 115 being connected via an amplifier 118 and cable 108 to the electronics unit 9 of Figure 1. The wand 117 is slidably enclosed in a scabbard 119, and movement of the wand 117 relative to the scabbard 119 is detected by a position transducer 120 which sends a signal representing the relative position of the wand 117 and scabbard 119 back to the electronics unit 9 via cable 108. As in the embodiment of Figure 3, the amplifier 118 increases the output voltage of detector coil 115 and compensates for any frequency dependance of the output of the coil 115 on the frequency of the alternating current in the drive coil assembly 104.

The operation of the apparatus of figures 1, 4 and 5 will now be described.

In use, the drive coil assembly 104 is clamped around the column 2 at ground level 3 and energised with an alternating current from electronics unit 9. The scabbard 119 containing detector 105 is placed inside the column 2, and the wand 117 pulled up within the scabbard 119 so that the detector coil 115 is located adjacent the upper turn 111a of the coil 111 of drive column assembly 104.

The frequency of the alternating current supplied to drive coil assembly 104 is then adjusted so as to give a predetermined phase relationship between the current through the drive coil assembly 104 and the output voltage from the detector coil 115. This serves to calibrate the apparatus so that readings obtained in the zone of interest of the column 2 (i.e. at ground level 3) can be converted into values for loss of wall thickness.

The wand 117 is moved up and down inside scabbard 19 so that the detector coil 115 passes through the zone where corrosion may have occurred, and the scabbard 119 is moved to successive positions around the inside of a column 2. The output signals from detector coil 115 are output via cable 108, together with data from position transducer 120, and are processed within electronics unit 9. In this embodiment, the display unit 10 contains a computer, which further processes the data by appropriate software so that the results are displayed on the computer screen in such a form as to show the location and degree of any wall loss within the scanned region of the column 2. The data can also be stored in the data storage system of the computer, together with an identification of the lighting column.

The embodiment of figures 4 and 5 has the advantages over the embodiment of figures 2 and 3 that no connectors 14 are required in the drive coil 111, and the display 10 is capable of showing the full coverage of the area of interest, readings being automatically standardised against a sound part of the column 2. There is also a permanent record of the inspection process.

It will be appreciated by persons skilled in the art that the above embodiment has been described by way of example only and not in any limitative sense, and that various alterations and modifications are possible without departure from the scope of the invention as defined by the appended claims.

## Claims

1. A method of detecting corrosion of a hollow metallic tube, the method comprising:-
applying a varying first magnetic field to a hollow metallic tube to induce a varying electric current in the tube; and
detecting a second magnetic field caused at least partially by said varying electric current in the tube.

2. A method according to claim 1, wherein the step of applying said first magnetic field to the hollow metallic tube comprises applying a varying electric current to at least one excitation coil arranged adjacent the tube.

3. A method according to claim 2, wherein at least one said excitation coil at least partially surrounds the tube.

4. A method according to any one of the preceding claims, wherein the hollow metallic tube is a lighting column.

5. A method according to any one of the preceding claims, wherein the step of detecting said second magnetic field comprises detecting said second magnetic field at at least one location inside the hollow metallic tube.

6. A method according to any one of the preceding claims, further comprising the step of evaluating phase and/or amplitude data of said second magnetic field.

7. A method according to any one of the preceding claims, further comprising the step of comparing data representing said second magnetic field at a predetermined location along the tube with data corresponding to an uncorroded part of the tube.

8. An apparatus for detecting corrosion of a hollow metallic tube, the apparatus comprising:-
excitation means for applying a varying first magnetic field to a hollow metallic tube to induce a varying electric current in the tube; and
detection means for detecting a second magnetic field caused at least partially by said varying electric current in the tube.

9. An apparatus according to claim 8, wherein the excitation means comprises at least one excitation coil for at least partially surrounding the tube.

10. An apparatus according to claim 9, wherein at least one said excitation coil comprises respective hinge means and has open and closed conditions for respectively enabling the coil to be mounted to and removed from the tube.

11. An apparatus according to claim 10, wherein the windings of at least one said excitation coil are not interrupted when said coil is in the open condition thereof.

12. An apparatus according to any one of claims 8 to 11, wherein the detection means is adapted to detect said second magnetic field at at least one location inside the tube.

13. An apparatus according to any one of claims 8 to 12, wherein said detection means comprises at least one detection coil and/or Hall effect detector and/or magnetic diode.

14. An apparatus according to any one of claims 8 to 13, further comprising amplifier means for amplifying signals representing said second magnetic field.

15. An apparatus according to any one of claims 8 to 14, further comprising position detector means for detecting changes in the position of said detection means relative to the tube.

16. An apparatus according to claim 15, wherein said detection means comprise at least one detector, and said position detector means comprises at least one housing for receiving a respective detector and providing a respective output signal representing changes in the position of said detector relative to said housing.
